# EUROPÄISCHE PATENTSCHRIFT

(11) **EP 1 830 953 B1**
(45) Veröffentlichungstag und Bekanntmachung des Hinweises auf die Patenterteilung: **20.08.2008**
(21) Anmeldenummer: 05802614.7
(22) Anmeldetag: 20.10.2005
(51) Int. Cl.: B01J 19/18, C08G 63/78

(54) **VERFAHREN ZUR HERSTELLUNG VON POLYESTERN UND DAFÜR GEEIGNETER RINGSCHEIBENREAKTOR**
METHOD FOR PRODUCING POLYESTERS AND A DISK RING REACTOR FOR CARRYING OUT SAID METHOD
PROCEDE DE FABRICATION DE POLYESTERS ET REACTEUR A DISQUES ANNULAIRES DESTINE A CET EFFET

(30) Priorität: 04.11.2004 DE 102004053199
(43) Veröffentlichungstag der Anmeldung: 12.09.2007
(73) Patentinhaber: Lurgi Zimmer GmbH, 60295 Frankfurt am Main (DE)
(72) Erfinder: WILHELM, Fritz, 61184 Karben (DE); REISEN, Michael, 60316 Frankfurt am Main (DE); HÖLTING, Ludwig, 63486 Bruchköbel (DE); SEIDEL, Peter, 63452 Hanau (DE); REICHWEIN, Peter, 65599 Dornburg (DE)
(74) Vertreter: Meyer-Dulheuer, Karl-Hermann
(86) Internationale Anmeldenummer: PCT/EP2005/011264
(87) Internationale Veröffentlichungsnummer: WO 2006/048123

(56) Entgegenhaltungen:
- DE-A1- 1 745 541
- DE-A1- 4 447 422
- US-A- 3 118 739
- US-B1- 6 657 039

## Beschreibung

Gegenstand der Erfindung ist ein Verfahren zur Herstellung von Polyestern aus Schmelzen von Präkondensaten sowie ein dafür geeigneter Ringscheibenreaktor mit einer ungerührten Austrittskammer.

Ringscheibenreaktoren zur kontinuierlichen Herstellung von Polyestern sind seit längerem bekannt. Dabei handelt es sich zumeist um zylindrische, liegende, beheizte Behälter mit Zu- und Ablaufanschlüssen für das Prä- und das Polykondensat an den einander gegenüberliegenden Enden des Ringscheibenreaktors. In dem Ringscheibenreaktor befinden sich eine Vielzahl von um eine horizontale Achse rotierenden Elementen, die das Präkondensat durchmischen und durch Ablaufen der an diesen Elementen anhaftenden zähen Schmelze eine große Oberfläche zur Ausgasung des Polykondensats erzeugen. Derartige Vorrichtungen sind in den deutschen Patentanmeldungen 1 745 541, 1 720 692, 2 100 615 und 2 114 080, sowie in den europäischen Patenten und Patentanmeldungen 0 320 586, 0 719 582, 0 711 597 und 1 386 659 beschrieben.

In DE 44 47 422 A1 wird eine Reaktorvorrichtung für fließfähige Medien, insbesondere für Polymere zur Polykondensation von Polyester mit einem liegend angeordneten Gehäuse, das an einem Ende einen Einlass für die Zufuhr des Mediums und am anderen Ende einen Auslass für dessen Austragung aufweist, und mit einem in dem Gehäuse über Stummelwellen drehbar gelagerten Rotor, der ringförmige Elemente zum Bewegen des Mediums aufweist, vorgeschlagen. Der Rotor weist einen mit Durchbrechungen versehenen Hohlzylinder auf. Der Anstellwinkel der ringförmigen Elemente zum Bewegen des Mediums nimmt in Förderrichtung ab.

Nachteilig bei den bekannten Ringscheibenreaktoren ist, dass sich an der Innenwand des Reaktors Polykondensatreste abscheiden, die nicht nur zu Verkrustungen und Verschmutzungen des Reaktors führen, sondern auch ein verfärbtes und mit unerwünschten Einschlüssen behaftetes Produkt ergeben, wenn dieses über einen längeren Zeitraum an der Reaktorinnenwand haftet und dabei hohen Reaktionstemperaturen ausgesetzt ist, die eine thermische Schädigung und Vernetzungen des Polykondensats ergeben. Nicht filtrierbare, gelartige Verunreinigungen stören dabei den Polymerverarbeitungsprozess und mindern die Produktqualität nachhaltig.

Es stellte sich deshalb die Aufgabe, ein neues Verfahren und einen verbesserten Ringscheibenreaktor zu entwickeln, bei dem während der Polykondensation ein Selbstreinigungseffekt auftritt, durch den die Ausbildung von Verkrustungen, Ablagerungen und Fehlprodukten an der Reaktorinnenwand vermieden und somit eine gleichmäßig hohe Produktqualität gewährleistet wird.

Gegenstand der Erfindung ist deshalb ein Verfahren zur Herstellung von Polyestern wie zum Beispiel Polyethylen-, Polypropylen- und Polybutylenterephthalat ausgehend von Präkondensaten, bei dem Brüden mit aerosolartig verteilten Präkondensatbestandteilen durch einen Polykondensationsreaktor geleitet werden, in welchem Präkondensatbestandteile an der Reaktorwand und in einer Austrittskammer des Reaktors an einer Abscheidevorrichtung niedergeschlagen werden. Die Niederschläge werden dann auf den ungerührten Austragssumpf geleitet und die oberen Schichten des Austragssumpfes kontinuierlich in den gerührten Reaktorbereich rezirkuliert und damit einer Rückmischung und weiteren Polykondensation unterzogen.

Als Polykondensationsreaktor wird vorzugsweise ein Ringscheibenreaktor eingesetzt, bei dem im Interesse einheitlicher Verweilzeiten und eines kontrollierten Viskositätsanstieges der Reaktionsraum im Sumpf durch Trennbleche in mehrere Kammern unterteilt ist, die mittels Abströmöffnungen miteinander verbunden sind. Ein derartiger erfindungsgemäßer Ringscheibenreaktor zur Herstellung von Polyestern besteht aus einem beheizbaren, zylindrischen, liegenden Behälter mit mindesten einem Einlass für die Schmelze und mindestens einem Auslass sowie mindestens einem Brüdenaustritt jeweils oberhalb eines Schmelzeauslasses und einem internen, der Behälterform angepassten Rührsystem. Dieses Rührsystem beinhaltet senkrecht angeordnete Ringscheiben, die mittels Speichenelementen auf wenigstens einer gemeinsamen horizontalen Antriebswelle befestigt sind. Aus der ungerührten Austrittskammer wird durch mindestens eine Öffnung der Trennwand in die davor liegende, gerührte Kammer eine Rückströmung erzielt. Dadurch, dass der Inhalt der Austrittskammer nicht mittels rotierender Elemente bewegt wird, sind eine zuverlässige Niveaumessung und ein minimales Produktniveau möglich; der Austrag des fertigen Polykondensats wird nicht gestört.

In einem derartigen Ringscheibenreaktor bestehen die in der letzten Trennwand angeordneten Öffnungen aus mindestens einer (vorzugsweise gegenüber dem bodenseitigen Produktaustritt auf der Seite des durch die drehenden Ringscheiben angehobenen Produktsumpfes, d. h. der Auftauchseite des Rührers höher gestellten) Produktabströmöffnung und mindestens einer Produktrückströmöffnung (auf der entgegen gesetzten Abtauchseite des Rührers), welche vorzugsweise zum Ausschluss stagnierender Sumpfzonen als eine wandseitige, ausgehend vom Behältertiefpunkt stetig erweiterte, randständige Öffnung ausgeführt ist.

Eine verbesserte Niveaukontrolle und Niveauminimalisierung erfolgt mit einer zusätzlichen (den Austragssumpf begrenzenden) Überströmöffnung, die radial innerhalb der letzten Ringscheibe angeordnet ist. Dadurch werden Zirkulationsströmungen zwischen der letzten gerührten Kammer und der Austragskammer induziert, die einen Abbau des Polymers infolge zu langer Verweilzeiten in nicht durchströmten Ecken und Produktverfärbungen verhindern.

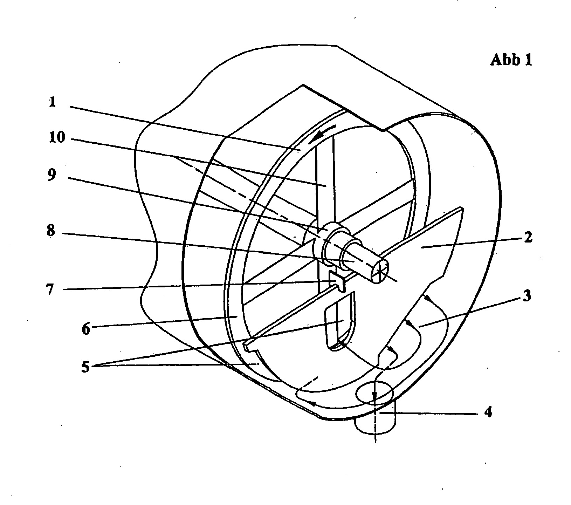

Da wegen der hohen Viskosität das Produkt an den Rührelementen haftet, bildet sich im Sumpf ein im Querschnitt nierenförmiges Profil aus, das in Drehrichtung deutlich höher ist als auf der gegenüberliegenden Seite, an der die Rührelemente in den Sumpf eintreten. Durch die höhergestellte Produktabströmöffnung an der Rührelementaustrittsseite quillt das Polymer in die Austrittskammer und strömt dann durch die wandseitige Öffnung auf der Rührelementeintrittseite wieder in die gerührte Kammer zurück, wobei ein abgetauchter Produktteilstrom die Austrittskammer über den Austrittsstutzen verlässt (Abb.1). Mit der Lage der Eintritts- und Austrittsöffnungen in der letzten Trennwand lassen sich die Strömungsrichtung, Strömungsintensität und das Sumpfniveau steuern. Durch die höher gelegene Überströmöffnung wird zusätzlich Produkt von der Oberfläche der Austrittskammer in die letzte gerührte Kammer geleitet, so dass das von der Prallplatte abtropfende und das von der Heckwand abfließende Präkondensatmaterial einer geordneten Reaktion in der Polymerhauptmasse zugeführt wird.

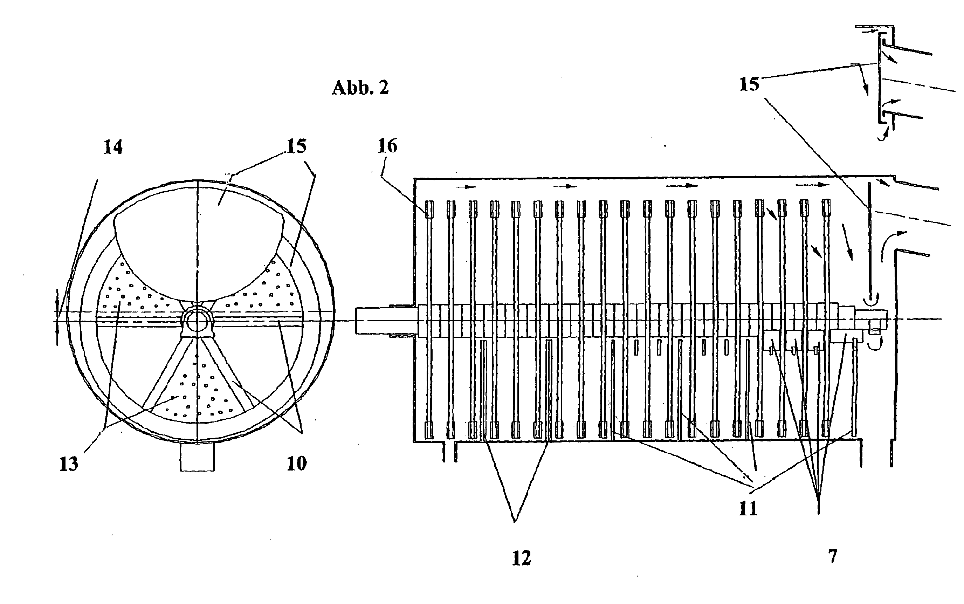

Mit geeigneten Prozessbedingungen bewirkt die erfindungsgemäße Konstruktion des Ringscheibenreaktors, dass Präkondensat einmal durch das Aufschäumen der Reaktionsmasse und durch das Hochspritzen von Tropfen von den produktbeladenen Rührern an die Reaktorwand (insbesondere beim Platzen von Dampfblasen an der Rühreroberfläche), zum anderen durch das Suspendieren und Mitreißen feiner Aggregate (Tröpfchen, Schaumlamellen) in den Brüdenstrom gelangen und eine nachfolgende Ausscheidung von Präkondesat aus den Brüden an die Reaktorwände erfolgt. Dieser Vorgang wird erfindungsgemäß durch eine gezielte Brüdenführung im oberen Reaktorteil (bei Installation ausreichend hoher Widerstände gegen Axialströmungen im Reaktorinnenraum), eine erhöhte Randgängigkeit der Rührer im Reaktoreingangsbereich und den Sekundärströmungen (Wirbetzellen) zwischen den Ringscheiben und der oberen Reaktorwand verstärkt. Da der Gasabfluss erfindungsgemäß an der Produktaustrittsseite des Ringscheibenreaktors angeordnet ist, gelangen mit den tröpfchenhaltigen aerosolähnlichen Brüden auch an den hinteren Teil des Reaktors niedrig viskose Präkondensatbestandteile als Waschfilm an die Wände, welche die ansonsten zähen Beläge lösen und zum Abfließen bringen, ehe eine thermische Schädigung und Rückstandsbildung im leckluftfreien Reaktorsystem einsetzt (Abb. 2). Einer Verkrustung oder Ablagerung von Polyestern an der Reaktorinnenwand wird somit wirksam entgegengewirkt.

Die in der Austrittskammer des Reaktors vorgesehene Abscheidevorrichtung verhindert einen übermäßigen und den Kondensationsbetrieb störenden Austrag von mitgerissenem Produkt im Abgasstrom und kann in Form einer Prallplatte, eines Tropfenabscheiders, eines Demisters oder in Form anderer geeigneter Strömungsumlenkungen ausgeführt sein. Eine einfache, totraumfrei positionierte Prallplatte ist aus Gründen eines begrenzten Druckverlustes besonders bevorzugt. Diese Prallplatte kann mit oder ohne Krempe ausgeführt sein. Der Brüdenstutzen für den Gasabfluss kann mit oder ohne Kragen ausgeführt werden.

Um den erfindungsgemäßen Selbstreinigungseffekt möglichst wirksam werden zu lassen, sollte die intrinsische Viskosität des Präkondensats maximal nicht mehr als 0,37 dl/g, vorzugsweise 0,21 bis 0,33 dl/g betragen. Die Methode zur Bestimmung der intrinsischen Viskosität wird beispielsweise in der DE 101 58 793 A1, Seite 5, Zeile 41-42 beschrieben. Zur angestrebten, partiellen Vorabscheidung von Präkondensat als Wandfilm werden bei dem erfindungsgemäßen Verfahren die Brüden entlang der Deckenwand vorzugsweise in einem sichelartigen Freiraum zwischen dem Reaktorgehäuse und den Rührern geleitet, der aufgrund einer Exzentrizität der Rührerachse gegenüber der Gehäuseachse vorliegt. Die bevorzugte Strömung stellt sich im Einzelnen ein aufgrund des bis zur Rührerwelle gekammerten bzw. abgedeckten Produktraumes, des hydromechanischen, kinematischen Verschlusses des Rührerinnenraumes durch die von den Scheiben und Speichen abfließenden Polymerfilme, verstärkt durch einen alternierenden Versatz benachbarter Ringscheibenrührern um jeweils den halben Speichensektorwinkel, und optional auf Grund statischer oder vorzugsweise rotierender Kammerungen des Dampfraumes gemäß der Erfindung ein.

Zudem wird das Verfahren wie erwähnt bevorzugt so ausgeführt, dass die Austrittskammer ein stationäres, kontrolliertes Produktmindestniveau aufweist.

Der vorstehend beschriebene Ringscheibenreaktor kann durch eine Reihe von besonderen Konstruktionsmerkmalen weiter verbessert werden:

Zur Intensivierung der Durchmischung und der Oberflächenerneuerung kann es vorteilhaft sein, eine zweite horizontale Drehachse in Verlängerung der ersten Drehachse einzusetzen, um mit einer der Viskosität besser angepassten Geschwindigkeit und einem geminderten Energieeintrag zu operieren. Da die Produktmitnahme und die Filmausbildung an den Rührelementen neben der Ausgestaltung dieser Elemente besonders von der Viskosität und der Umfangsgeschwindigkeit abhängen, kann es außerdem von Vorteil sein, die Umfangsgeschwindigkeit entsprechend dem Reaktionsfortschritt zu verändern. Üblicherweise ist das Verhältnis der Viskosität bei Eintritt in den Reaktor zur Viskosität beim Austritt aus dem Reaktor etwa 1 : 100 bis 1 : 200.

Ist in einem Ringscheibenreaktor neben einer ersten Rührerwelle noch eine zweite Rührerwelle mit reduzierter Drehzahl vorgesehen, kann diese mit gleicher oder größerer Exzentrizität der Wellenachse gegenüber der Behälterachse im Ausgangsbereich geführt werden. Zur Abstützung und Lagerung der Rührwellen innerhalb des Reaktors werden in vorteilhafter Weise produktgeschmierte Gleitlager vorgesehen. Im Normalfall erhält man hierdurch anstelle von zwei Wellendichtungen eine einzelne Wellendichtung und ein gemindertes Risiko von qualitätsschädlicher Leckluft.

Um bei gleicher Drehzahl im zylindrischen Behälter eine gleichmäßig gute Durchmischung des Polykondensats im Sumpf sowie eine gute Filmausbildung zu erzielen, ist es empfehlenswert, neben der Ausgestaltung der Rührelemente auch deren Abstände zueinander zu verändern. Durch diese Änderung des Abstands wird Platz geschaffen, so dass das zähere Filmprodukt im Sumpf eingemischt werden kann und der Energieeintrag durch wachsende Scherspalte begrenzt bleibt.

Mit der genannten zweiten Antriebswelle lässt sich die Drehzahl der Viskosität besser anpassen und infolge der verminderten Drehzahl ein kleinerer Abstand zwischen den Rührelementen einstellen, was zu einer höheren spezifischen Oberfläche führt und es erlaubt, ein höheres Viskositätsverhältnis von 1 : 400 bis 1 : 1.000 zu erreichen. Mit diesem zweiten Antrieb können besonders hochviskose Produkte erzeugt und die spezifische Oberfläche maximiert werden, womit auch leistungsfähigere Apparate darstellbar werden.

Die Intrinsic Viskosität (IV) verschiedener Polymerprodukte lässt sich somit auf Werte kleiner oder gleich 1.35 dl/g, bevorzugt vom Bereich IV = 0.5 dl/g bis 1.05 dl/g mit einer Reaktorwelle auf IV = 0.5 dl/g bis 1.25 dl/g mit zwei Reaktorwellen steigern.

Eine bevorzugte Ausführungsform besteht aus einem beheizbaren, zylindrischen, liegenden Behälter mit einem Einlass für die Schmelze an einem Ende und einem Auslass am anderen Ende sowie einem Brüdenaustritt in der Heckwand oberhalb des Schmelzeauslasses, so daß der Präkondensatstrom einheitlich, d. h. ungeteilt durch den Reaktor geführt wird.

Besonders hohe Durchsatzleistungen werden bei einem im Durchmesser limitierten Ringscheibenreaktor erzielt, wenn man den Präkondensatstrom in zwei Teilströme aufteilt, die ganz oder teilweise getrennt durch den Reaktor geleitet werden. Hierfür kann man zwei Präkondensatströme an den Deckelseiten des Reaktors aufgeben und das Endprodukt in der Mitte abführen. Durch diese Anordnung wird die Dampfbelastung bei gegebenem Reaktordurchmesser halbiert.

Es ist aber auch möglich, hohe Durchsatzleistungen in einem im Durchmesser limitierten Ringscheibenreaktor dann zu erzielen, wenn man den Präkondensatstrom im Bereich der Reaktormitte aufgibt, ihn in zwei Teilströme aufteilt und beide Teilströme auseinander laufend zu getrennten Produktauslässen an den Deckelseiten leitet. Hierbei ergibt sich die zusätzliche Möglichkeit, die Viskosität der beiden Endprodukte mittels Drehzahl und Temperaturführung individuell zu steuern. Nachteilig dabei ist, dass zwei Gasaustritte erforderlich sind.

Alle erfindungsgemäßen Merkmale lassen sich sowohl bei einheitlicher als auch, entsprechend angepaßt, bei geteilter Präkondensatstromführung verwirklichen.

Die Anordnung der verschiedenen Rührelemente mittels Speichen auf einer Welle bietet den Vorteil einer einfachen, flexiblen und robusten Konstruktion, die leicht montierbar und leicht zu warten ist, da die Rührelemente einzeln von der Welle abgezogen werden können. Bei Käfigkonstruktionen, wie sie in der europäischen Patentanmeldung 0 711 597 oder in der europäischen Patentschrift 0 719 582 beschrieben sind, handelt es sich hingegen um aufwendige Schweißkonstruktionen, die schwer zu warten sind. Auch sind dort zwei Wellendurchtritte vorgesehen, während bei der erfindungsgemäßen Konstruktion mit einem Innenlager nur ein Wellendurchtritt pro Antriebswelle erforderlich ist. Der zentrale Hohlzylinder beim Käfigrührer hat den Nachteil, dass durch den Mitriss herabtropfenden Polymers und durch Schaumbildung eine unerwünschte Längsmischung in axialer Richtung eintreten kann. Ordnet man stattdessen die Welle exzentrisch im Gehäuse an, so schafft man einen oberen Sichelraum, durch den der Gasstrom abströmen kann. Bei höheren Viskositäten besteht die Tendenz, dass das von den Rührelementen abfließende Material sich auf der Welle anhäuft und dabei die Polykondensationaktivität eingeschränkt wird. Daher ist es sinnvoll, insbesondere im höher viskosen Bereich, die Welle mittels spezieller Abstreifer zu reinigen. Im mittelviskosen Bereich genügt hierzu eine wellennahe Traverse zwischen einzelnen Rührelementen. Als Rührelemente kommen in erster Linie Ringscheiben oder Scheibensegmente in Frage, die als Voll- oder Lochscheiben ausgeführt sein können. Diese Scheiben können einzeln oder im Verbund angeordnet und auch mit Schöpfelementen bestückt werden.

Die zwischen den Speichen befindlichen freien Segmente können mittels gelochter Bleche alternierend abgedeckt werden. Ringscheibenrührer mit gerader Speichenanzahl können so abwechselnd einen normalen freien Sektor und einen verdeckten Sektor aufweisen. Schaltet man erfindungsgemäß bei axial fluchtenden Speichen mindest zwei dieser Ringscheiben so hintereinander, dass sich in der axialen Perspektive freie und abgedeckte Sektoren wechselseitig überdecken, erhält man eine effektive Umlenkung des axial strömenden Gases verbunden mit einer Abscheidung von Schaum und mitgerissenen Tropfen in axialer Richtung. Solche Umlenkung des axialen Gasstromes bewirkt eine Erhöhung der vertikalen Strömungskomponente und der Gasgeschwindigkeit im Sichelraum. Im Produktsumpf besteht gleichzeitig ein Kammerungseffekt, der ein unkontrolliertes Durchschießen von niedrig viskosem Material verhindert. An Stelle der gelochten Bleche sind auch ungelochte Bleche oder Drahtgewebe verwendbar.

Ein bei zunehmenden Schmelzzähigkeiten bevorzugter Übergang auf alternierend um den halben Speichensektorwinkel versetzte Speichen aufeinander folgender Ringscheibenrührer dient neben der gleichmäßigen Beschleierung des Rührerinnenraumes zugleich der verbesserten Beweglichkeit und Mischung des Produktsumpfes. Zur gesteigerten Axialförderung der Produktschmelze ist es außerdem möglich, die Speichen aufeinander folgender Rührer in der axialen Richtung schraubenförmig um den Winkel 0,4 bis 4 Grad nacheilend zu versetzen.

Weitere Vorteile lassen sich dadurch erzielen, dass die zwischen den Kammern vorgesehenen Trennwände beheizbar sind. Vorteilhaft ist es auch, wenn zur Abdichtung der Rührwellen gegenüber der äußeren Atmosphäre ein mit einer Sperrflüssigkeit beaufschlagtes, mehrstufiges Wellendichtlippenringsystem vorgesehen ist. Zur Abdichtung der Rührwellen gegenüber der äußeren Atmosphäre kann auch ein mit einer Sperrflüssigkeit beaufschlagtes, doppelt wirkendes Gleitringdichtungssystem eingesetzt werden. Falls erforderlich, ist eine zusätzliche Kühlung des Dichtungssystems integrierbar. Mit diesen Dichtungssystemen ist eine wartungsfreie Laufzeit von mehreren Jahren möglich.

Die besonderen Konstruktionsmerkmale des erfindungsgemäßen Ringscheibenreaktors sind aus den beiliegenden Abb. 1 und Abb.2 ersichtlich.

### Bezugszeichenliste:

- 1: Drehende Ringscheibe
- 2: letzte Trennwand
- 3: Abströmöffnung
- 4: Produktaustritt
- 5: Rückströmöffnungen
- 6: Rührereinlaufseite
- 7: Wellenabstreifer
- 8: Welle
- 9: Nabe
- 10: Speiche
- 11: Unbeheizte Trennbleche
- 12: beheizte Trennbleche
- 13: mit Lochblech überdeckter Sektor
- 14: Exzentrizität
- 15: Prallplatte
- 16: Ringscheiben

## Patentansprüche

1. Verfahren zur Herstellung von Polyestern wie Polyethylen-, Polypropylen- und Polybutylenterephthalat aus Schmelzen von Präkondensaten von Polyestern, wobei die Brüden mit aerosolartig verteilten Präkondensatbestandteilen durch einen Polykondensationsreaktor und/oder einen Ringscheibenreaktor geleitet werden, in welchem Präkondensatbestandteile an der Reaktorwand und in einer Austrittskammer des Reaktors an einer Abscheidevorrichtung niedergeschlagen werden, **dadurch gekennzeichnet, dass** die Niederschläge auf den ungerührten Austragssumpf geleitet und die oberen Schichten des Austragssumpfes kontinuierlich in den gerührten Reaktorbereich rezirkuliert und damit einer Rückmischung und weiteren Polykondensation unterzogen werden, wobei hierzu das zwischen der Austrittskammer und der davor liegenden gerührten Kammer befindliche letzte Trennblech (2) mindestens eine Abströmöffnung (3) auf der Auftauchseite des Rührers sowie mindestens eine Rückströmöffnung (5) auf der Abtauchseite des Rührers aufweist.

2. Verfahren nach Anspruch 1, **dadurch gekennzeichnet, dass** die intrinsische Viskosität des Präkondensats auf maximale Werte kleiner gleich 0.37 dl/g, vorzugsweise auf Werte von 0.21 bis 0.33 dl/g begrenzt ist.

3. Verfahren nach Anspruch 1 bis 2, **dadurch gekennzeichnet, dass** zur partiellen Vorabscheidung von Präkondensat als Film die präkondensathaltigen Brüden entlang der Deckenwand geleitet werden.

4. Verfahren nach Anspruch 1 bis 3, **dadurch gekennzeichnet, dass** die Randgängigkeit der Rührelemente des Polykondensationsreaktors auf der Produkteinlassseite höher ist als auf der Produktauslassseite.

5. Verfahren nach Anspruch 1 bis 4, **dadurch gekennzeichnet, dass** die Austrittskammer ein stationäres, kontrolliertes Produktniveau aufweist.

6. Verfahren nach Anspruch 1 bis 5, **dadurch gekennzeichnet, dass** die intrinsische Produktviskosität zwischen 0.5 dl/g bis 1.35 dl/g, vorzugsweise zwischen 0.55 dl/g bis 1.25 dl/g gewählt wird.

7. Verfahren nach Anspruch 1 bis 6, **dadurch gekennzeichnet, dass** als Polykondensationsreaktor ein Ringscheibenreaktor eingesetzt wird.

8. Ringscheibenreaktor zur Herstellung von Polykondensaten nach dem Verfahren gemäß den Ansprüchen 1 bis 7, bestehend aus einem beheizbaren, zylindrischen, liegenden Behälter mit mindestens einem Einlass und mindestens einem Auslass für die Schmelze, mit einer Unterkammerung des Produktraumes mittels Trennblechen (11, 12) und einer Abströmöffnung (3) in jedem Trennblech sowie mindestens einem, jeweils oberhalb eines Schmelzeauslasses angeordneten Brüdenaustritt und einem internen, der Behälterform angepassten Rührsystem, welches aus senkrecht angeordneten Ringscheiben (1, 16) besteht, die mittels Speichenelementen (10) auf wenigstens einer gemeinsamen horizontalen Antriebswelle (8) befestigt sind, **dadurch gekennzeichnet, dass** das zwischen der ungerührten Austrittskammer, die mit einer Abscheidevorrichtung ausgestattet ist, und der davor liegenden gerührten Kammer befindliche letzte Trennblech (2) mindestens eine Abströmöffnung (3) auf der Auftauchseite des Rührers sowie mindestens eine Rückströmöffnung (5) auf der Abtauchseite des Rührers aufweist.

9. Ringscheibenreaktor nach Anspruch 8, **dadurch gekennzeichnet, dass** die mindestens eine Rückströmöffnung (5) des letzten Trennbleches (2) als eine wandseitige, ausgehend vom Behältertiefpunkt stetig erweiterte, randständige Öffnung ausgeführt ist.

10. Ringscheibenreaktor nach den Ansprüchen 8 und 9, **dadurch gekennzeichnet, dass** zusätzlich zur wandseitigen, randständigen Rückströmöffnung (5) eine den Austragssumpf begrenzende Überströmöffnung radial innerhalb der letzten Ringscheibe vorgesehen ist.

11. Ringscheibenreaktor nach den Ansprüchen 8 bis 10, **dadurch gekennzeichnet, dass** die Rührerachse gegenüber der Gehäuseachse exzentrisch positioniert ist.

12. Ringscheibenreaktor nach den Ansprüchen 8 bis 11, **dadurch gekennzeichnet, dass** vor dem Brüdenaustritt im Bereich der Austrittskammer eine Abscheidevorrichtung, beispielsweise eine Prallplatte (15), ein Tropfenabscheider, ein Demister oder eine andere geeignete Strömungsumlenkung zur Abscheidung mitgerissener oder aerosolartig verteilter Produktbestandteile positioniert ist.

13. Ringscheibenreaktor nach den Ansprüchen 8 bis 12, **dadurch gekennzeichnet, dass** einer ersten Rührerwelle eine zweite Rührerwelle mit reduzierter Drehzahl und gleicher oder größerer Exzentrizität der Wellenachse gegenüber der Behälterachse im Ausgangsbereich nachfolgt.

14. Ringscheibenreaktor nach den Ansprüchen 8 bis 13, **dadurch gekennzeichnet, dass** zur Abstützung und inneren Lagerung der Rührwellen produktgeschmierte Gleitlager vorgesehen sind.

15. Ringscheibenreaktor nach den Ansprüchen 8 bis 14, **dadurch gekennzeichnet, dass** er einen Einlass für den Präkondensatstrom an einem Ende und einen Auslass für die Schmelze am anderen Ende aufweist.

16. Ringscheibenreaktor nach den Ansprüchen 8 bis 14, **dadurch gekennzeichnet, dass** der Präkondensatstrom in zwei Teilströme aufgeteilt ist, die ganz oder teilweise getrennt durch den Reaktor geleitet werden.

17. Ringscheibenreaktor nach Anspruch 16, **dadurch gekennzeichnet, dass** die beiden Teilströme aufeinander zulaufend durch den Reaktor geführt und durch einen gemeinsamen Produktaustritt mittig aus dem Reaktor entnommen werden.

18. Ringscheibenreaktor nach Anspruch 16, **dadurch gekennzeichnet, dass** die beiden Teilströme auseinander laufend zu getrennten Produktauslässen an den Deckelseiten geleitet werden.

19. Ringscheibenreaktor nach den Ansprüchen 8 bis 18, **dadurch gekennzeichnet, dass** die Ringscheiben (1) mittels Speichen (10) und Naben (9) auf einer Welle (8) befestigt sind.

20. Ringscheibenreaktor nach den Ansprüchen 8 bis 19, **dadurch gekennzeichnet, dass** die Speichen (10) der Ringscheiben (1) axial fluchtend angeordnet sind.

21. Ringscheibenreaktor nach den Ansprüchen 8 bis 19, **dadurch gekennzeichnet, dass** die Speichen (10) benachbarter Ringscheiben (1) um den halben Speichensektorwinkel zwischen den Speichen alternierend gegeneinander versetzt und gruppenweise axial fluchtend angeordnet sind.

22. Ringscheibenreaktor nach den Ansprüchen 8 bis 19, **dadurch gekennzeichnet, dass** die Speichen (10) aufeinander folgender Ringscheiben (1) schraubenförmig gegeneinander versetzt angeordnet sind.

23. Ringscheibenreaktor nach den Ansprüchen 8 bis 22, **dadurch gekennzeichnet, dass** Ringscheibenrührer mit gerader Speichenanzahl zwischen den Speichen (10) alternierend einen normalen freien Sektor und einen mit Scheibensegmenten (Blechen, Lochblechen) überdeckten Sektor (13) aufweisen und mindestens paarweise hintereinander dergestalt angeordnet werden, dass sich (in der axialen Perspektive) freie und abgedeckte Sektoren wechselseitig überdecken.

24. Ringscheibenreaktor nach den Ansprüchen 8 bis 23, **dadurch gekennzeichnet, dass** die zwischen den Kammern vorgesehenen Trennwände (12) beheizbar sind.

25. Ringscheibenreaktor nach den Ansprüchen 8 bis 24, **dadurch gekennzeichnet, dass** zur Abdichtung der Rührwellen gegenüber der äußeren Atmosphäre ein mit einer Sperrflüssigkeit beaufschlagtes, mehrstufiges Wellendichtlippenringsystem vorgesehen ist.

26. Ringscheibenreaktor nach den Ansprüchen 8 bis 25, **dadurch gekennzeichnet, dass** zur Abdichtung der Rührwellen gegenüber der äußeren Atmosphäre ein mit einer Sperrflüssigkeit beaufschlagtes, doppelt wirkendes Gleitringdichtungssystem vorgesehen ist.

## Claims

1. A method for producing polyesters such as polyethylene, polypropylene and polybutylene terephthalate from melts of pre-condensates of polyesters, wherein the vapours with aerosol-like distributed pre-condensate components are passed through a polycondensation reactor and/or a disk ring reactor in which pre-condensate components are deposited on the reactor wall and in an outlet chamber of the reactor on a depositing device, **characterised in that** the deposits are passed to the unagitated discharge sump and the upper layers of the discharge sump are continuously recirculated in the agitated reactor zone and are thus subjected to inverse mixing and further polycondensation, wherein for this purpose the last separating sheet (2) located between the outlet chamber and the agitated chamber located in front thereof, has at least one drain opening (3) on the surfacing side of the agitator and at least one return flow opening (5) on the submerging side of the agitator.

2. The method according to claim 1, **characterised in that** the intrinsic viscosity of the pre-condensate is limited to maximum values of less than or equal to 0.37 dl/g, preferably to values of 0.21 to 0.33 dl/g.

3. The method according to claim 1 to 2, **characterised in that** the pre-condensate-containing vapours are passed along the cover wall for the partial pre-separation of pre-condensate as film.

4. The method according to one of claims 1 to 3, **characterised in that** the wall effect of the agitator elements of the polycondensation reactor is higher on the product inlet side than on the product outlet side.

5. The method according to one of claims 1 to 4, **characterised in that** the outlet chamber has a stationary, controlled product level.

6. The method according to one of claims 1 to 5, **characterised in that** the intrinsic product viscosity is selected between 0.5 dl/g and 1.35 dl/g, preferably between 0.55 dl/g and 1.25 dl/g.

7. The method according to one of claims 1 to 6, **characterised in that** a disk ring reactor is used as the polycondensation reactor.

8. A disk ring reactor for the production of polycondensates according to the method of claims 1 to 7, consisting of a heatable, cylindrical, horizontal container having at least one inlet and at least one outlet for the melts, comprising a subdivision of the product chamber by means of separating sheets (11, 12) and a drain opening (3) in each separating sheet and at least one vapour outlet located above the melt outlet in each case and an internal agitator system adapted to the container shape, which consists of perpendicularly arranged ring disks (1, 16) which are secured by means of spoke elements (10) on at least one common horizontal drive shaft (8), **characterised in that** the last separating sheet (2) located between the non-agitated outlet chamber, which is fitted with a separating device, and the agitated chamber located in front thereof, has at least one drain opening (3) on the surfacing side of the agitator and at least one return flow opening (5) on the submerging side of the agitator.

9. The disk ring reactor according to claim 8, **characterised in that** the at least one return flow opening (5) of the last separating sheet (2) is configured as a wall-side, marginal opening which is expanded continuously from the container low point.

10. The disk ring reactor according to claims 8 and 9, **characterised in that** in addition to the wall-side, marginal return-flow opening (5), an overflow opening defining the discharge sump is provided radially inside the last ring disk.

11. The disk ring reactor according to claims 8 to 10, **characterised in that** the agitator axis is positioned eccentrically with respect to the housing axis.

12. The disk ring reactor according to claims 8 to 11, **characterised in that** a separating device, for example, a baffle plate (15), a droplet separator, a demister or another suitable flow deflection for separating entrained or aerosol-like distributed product components is positioned in front of the vapours outlet in the area of the outlet chamber.

13. The disk ring reactor according to claims 8 to 12, **characterised in that** a first agitator shaft is followed by a second agitator shaft having reduced rotational speed and the same or greater eccentricity of the shaft axis with respect to the container axis in the outlet region.

14. The disk ring reactor according to claims 8 to 13, **characterised in that** product-lubricated plain bearings are provided for support and inner mounting of the agitator shafts.

15. The disk ring reactor according to claims 8 to 14, **characterised in that** this has an inlet for the pre-condensate stream at one end and an outlet for the melt at the other end.

16. The disk ring reactor according to claims 8 to 14, **characterised in that** the pre-condensate stream is divided into two partial stream which are passed through the reactor in a completely or partially separated manner.

17. The disk ring reactor according to claim 16, **characterised in that** the two partial streams are passed through the reactor running towards one another and are removed centrally from the reactor through a common product outlet.

18. The disk ring reactor according to claim 16, **characterised in that** the two partial streams are passed running away from one another to separate product outlets on the cover sides.

19. The disk ring reactor according to claims 8 to 18, **characterised in that** the ring disks (1) are fastened on a shaft (8) by means of spokes (10) and hubs (9).

20. The disk ring reactor according to claims 8 to 19, **characterised in that** the spokes (10) of the ring disks (1) are arranged axially in alignment.

21. The disk ring reactor according to claims 8 to 19, **characterised in that** the spokes (10) of neighbouring ring disks (1) are arranged alternately offset with respect to one another by half the spoke sector angle between the spokes and axially aligned in groups.

22. The disk ring reactor according to claims 8 to 19, **characterised in that** the spokes (10) of successive ring disks (1) are arranged helically offset with respect to one another.

23. The disk ring reactor according to claims 8 to 22, **characterised in that** disk ring agitators having an even number of spokes have alternately a normal free sector and a sector (13) covered with disk segments (sheets, perforated sheets) between the spokes (10) and are arranged at least in pairs one behind the other in such a manner that (in the axial perspective) free and covered sectors alternately overlap.

24. The disk ring reactor according to claims 8 to 23, **characterised in that** the dividing walls (12) provided between the chambers are heatable.

25. The disk ring reactor according to claims 8 to 24, **characterised in that** a multi-stage shaft sealing-lip ring system acted upon with a blocking fluid is provided for sealing the agitator shafts with respect to the external atmosphere.

26. The disk ring reactor according to claims 8 to 25, **characterised in that** a double-acting sliding ring system acted upon with a blocking fluid is provided for sealing the agitator shafts with respect to the external atmosphere.

## Revendications

1. Procédé de production de polyesters, tels que des téréphtalates de polyéthylène, de polypropylène et de polybuthylène à partir de masses en fusion de précondensats de polyesters, les buées étant dirigées par des composants de précondensats distribués à la manière d'aérosols à travers un réacteur de précondensation et/ou un réacteur à disques annulaires, dans lequel des composants de précondensats se déposent sur la paroi du réacteur et dans une chambre de sortie du réacteur sur un dispositif de séparation, **caractérisé en ce que** les dépôts sont dirigés vers le pied de rejet et **en ce que** les couches supérieures du pied de rejet recirculent en continu dans la zone non agitée du réacteur et sont soumises de ce fait à une reconversion et à une polycondensation supplémentaire, la dernière tôle de séparation (2) située entre la chambre de sortie et la chambre agitée située en amont comportant à cet effet au moins un orifice d'écoulement (3) sur le côté d'émergence de l'agitateur, ainsi qu'au moins un orifice de reflux (5) sur le côté de plongée de l'agitateur.

2. Procédé selon la revendication 1, **caractérisé en ce que** la viscosité intrinsèque du précondensat est limitée à des valeurs maximales inférieures ou égales à 0.37 dl/g, de préférence à des valeurs de 0.21 à 0.33 dl/g.

3. Procédé selon la revendication 1 à 2, **caractérisé en ce que** pour la pré-séparation partielle de préconsensat sous la forme de film, les buées contenant du précondensat sont dirigées le long de la paroi supérieure.

4. Procédé selon la revendication 1 à 3, **caractérisé en ce que** l'opérabilité marginale des éléments agitateurs du réacteur de polycondensation sur le côté entrée du produit est supérieure à celle du côté sortie du produit.

5. Procédé selon la revendication 1 à 4, **caractérisé en ce que** la chambre de sortie présente un niveau de produit stationnaire contrôlé.

6. Procédé selon la revendication 1 à 5, **caractérisé en ce qu'**on choisit la viscosité intrinsèque du produit entre 0.5 dl/g à 1.35 dl/g, de préférence entre 0.55 dl/g à 1.25 dl/g.

7. Procédé selon la revendication 1 à 6, **caractérisé en ce qu'**on utilise en tant que réacteur de polycondensation un réacteur à disques annulaires.

8. Réacteur à disques annulaires pour la production de polycondensats selon le procédé selon les revendications 1 à 7, consistant dans un réservoir cylindrique, couché, susceptible d'être chauffé avec au moins une entrée et au moins une sortie pour la masse en fusion, avec une sous-séparation en chambres de l'espace à produit au moyen de tôles de séparation (11, 12) et un orifice d'écoulement (3) dans chaque tôle de séparation, ainsi qu'avec au moins une sortie de buée disposée au dessus d'une sortie de masse en fusion et un système agitateur interne, adapté à la forme du réservoir, consistant dans des disques annulaires (1, 16) disposés à la verticale, qui au moyen d'éléments à croisillons (10) sont fixés sur au moins un arbre d'entraînement (8) horizontal commun, **caractérisé en ce que** la dernière tôle de séparation (2) située entre la chambre de sortie non agitée et la chambre agitée située en amont de cette dernière comporte au moins un orifice d'écoulement (3) sur le côté émergence de l'agitateur, ainsi qu'au moins un orifice de reflux (5) sur le côté plongée de l'agitateur.

9. Réacteur à disques annulaires selon la revendication 8, **caractérisé en ce que** le au moins un orifice de reflux (5) de la dernière tôle de séparation (2) est réalisé sous la forme d'un orifice marginal, côté paroi, s'évasant en continu à partir du point bas du réservoir.

10. Réacteur à disques annulaires selon les revendications 8 et 9, **caractérisé en ce que**, en supplément de l'orifice de reflux (5) marginal, côté paroi, il est prévu côté radial, à l'intérieur du dernier disque annulaire un orifice de débordement limitant le pied de rejet.

11. Réacteur à disques annulaires selon les revendications 8 à 10, **caractérisé en ce que** l'axe de l'agitateur est positionné de façon excentrique, à l'opposée de l'axe du boîtier.

12. Réacteur à disques annulaires selon les revendications 8 à 11, **caractérisé en ce qu'**en amont de la sortie de buée, dans la région de la chambre de sortie est positionné un dispositif de séparation, par exemple une plaque déflectrice (15), un pare gouttes, un dispositif antibuée, ou un autre inverseur d'écoulement adapté, pour la séparation de composants de produit entraînés ou distribués à la manière d'un aérosol.

13. Réacteur à disques annulaires selon les revendications 8 à 12, **caractérisé en ce que** dans la zone de sortie, à un premier arbre d'agitateur fait suite un deuxième arbre d'agitateur à régime réduit et à excentricité identique ou supérieure de l'axe d'arbre par rapport à l'axe du réservoir.

14. Réacteur à disques annulaires selon les revendications 8 à 13, **caractérisé en ce que** pour le soutien et pour le logement intérieur des arbres d'agitateur, des paliers à glissement lubrifiés de produit sont prévus.

15. Réacteur à disques annulaires selon les revendications 8 à 14, **caractérisé en ce qu'**il comporte une entrée pour le flux de précondensat sur une extrémité et une sortie pour la masse en fusion sur l'autre extrémité.

16. Réacteur à disques annulaires selon les revendications 8 à 14, **caractérisé en ce que** le flux de précondensat est divisé en deux flux partiels, qui sont dirigés en étant totalement ou partiellement séparés à travers le réacteur.

17. Réacteur à disques annulaires selon la revendication 16, **caractérisé en ce que** les deux flux partiels sont guidés à travers le réacteur en se rejoignant et sont prélevés au centre hors du réacteur par une sortie de produit commune.

18. Réacteur à disques annulaires selon la revendication 16, **caractérisé en ce que** les deux flux partiels sont dirigés en se séparant vers des sorties de produit séparées sur le côté couvercle.

19. Réacteur à disques annulaires selon les revendications 8 à 18, **caractérisé en ce que** les disques annulaires (1) sont fixés au moyen de croisillons (10) et de moyeux (9) sur un arbre (8).

20. Réacteur à disques annulaires selon les revendications 8 à 19, **caractérisé en ce que** les croisillons (10) des disques annulaires (1) sont disposés en alignement axial.

21. Réacteur à disques annulaires selon les revendications 8 à 19, **caractérisé en ce que** les croisillons (10) de disques annulaires (1) voisins sont disposés en alternance, en étant déportés les uns par rapport aux autres de la valeur du demi angle sectoriel de croisillon entre les croisillons et en alignement axial par groupes.

22. Réacteur à disques annulaires selon les revendications 8 à 19, **caractérisé en ce que** les croisillons (10) de disques annulaires (1) successifs sont disposés en étant déportés les uns par rapport aux autres sous forme hélicoïdale.

23. Réacteur à disques annulaires selon les revendications 8 à 22, **caractérisé en ce que** des agitateurs à disques annulaires avec un nombre pair de croisillons comportent en alternance entre les croisillons (10) un secteur normal libre et un secteur (13) recouvert de segments de disques (tôles, tôles perforées) et sont disposés au moins par paires les uns derrière les autres, de sorte que des secteurs libres et recouverts se recouvrent réciproquement (en perspective axiale).

24. Réacteur à disques annulaires selon les revendications 8 à 23, **caractérisé en ce que** les parois de séparation (12) prévues entre les chambres sont susceptibles d'être chauffées.

25. Réacteur à disques annulaires selon les revendications 8 à 24, **caractérisé en ce que**, pour assurer l'étanchéité des arbres d'agitateur par rapport à l'atmosphère extérieure, il est prévu un système de bague à lèvres d'étanchement d'arbre à plusieurs degrés, soumis à un fluide obturant.

26. Réacteur à disques annulaires selon les revendications 8 à 25, **caractérisé en ce que**, pour assurer l'étanchéité des arbres d'agitateur par rapport à l'atmosphère extérieure, il est prévu un système de bague à lèvres d'étanchement d'arbre à double action, soumis à un fluide obturant.
